# EUROPEAN PATENT SPECIFICATION

(11) **EP 4 475 276 B1**
(45) Date of publication and mention of the grant of the patent: **18.02.2026**
(21) Application number: 23207567.1
(22) Date of filing: 02.11.2023
(51) Int. Cl.: H01M 50/224

(54) **LIQUID COOLING ASSEMBLY AND BATTERY PACK**
FLÜSSIGKEITSKÜHLANORDNUNG UND BATTERIEPACK
ENSEMBLE DE REFROIDISSEMENT PAR LIQUIDE ET BLOC-BATTERIE

(30) Priority: 08.06.2023 CN 202321454186 U; 08.06.2023 CN 202310676299
(43) Date of publication of application: 11.12.2024
(73) Proprietor: Eve Energy Co., Ltd., Huizhou, Guangdong 516006 (CN)
(72) Inventor: TIAN, Yuanwei, Guangdong 516006 (CN); LUO, Kun, Guangdong 516006 (CN); LU, Kaihang, Guangdong 516006 (CN); YAN, Shiwei, Guangdong 516006 (CN); LIU, Huajun, Guangdong 516006 (CN)
(74) Representative: GLP S.R.L.

(56) References cited:
- CN-A- 103 540 910
- CN-A- 106 025 132
- CN-U- 210 956 799
- CN-U- 218 731 270

## Description

### Field

The present application relates to the technical field of battery production and manufacturing, in particular to a liquid cooling assembly and battery pack.

### Background

As the energy density of battery packs gradually increases, liquid cooling technology is gradually becoming the mainstream of the battery thermal management solutions. The heat of the battery is transferred to the coolant through the liquid cooling plate, and the coolant takes the heat away to cool the battery pack.

As the capacity of the battery pack increases, the size of the battery pack gradually increases, and the size of the liquid cooling plate increases as well. The liquid cooling channel becomes longer, and the flow resistance of the coolant in the liquid cooling plate increases, which leads to uneven temperature of the coolant in different areas of the liquid cooling plate, thereby leading to the risk of partial overheating of the battery, which reduces the performance of the battery and affects the lifespan of the battery pack. The temperature of the coolant in the liquid cooling channel of the existing liquid cooling plate away from the inlet is relatively high, and in the case of the same flow rate of the liquid cooling channel, the coolant in the liquid cooling channel away from the inlet is not effective in exchanging heat to the battery cell, which may easily lead to partial overheating of the battery and affect the performance of the battery. CN210956799 discloses a power battery pack box structure, in which the battery pack box is an integrated design including a frame, a liquid cooling plate and a battery module. The frame and the liquid cooling plate are connected by spot welding to form the battery pack box. The battery module is placed in the battery pack box, and the bottom of the battery module is in contact with the liquid cooling plate. CN218731270 discloses a liquid cooling plate and a battery pack tray, the liquid cooling plate including a turbulence plate and a temperature equalization plate, the flow channel plate formed with a flow channel, the flow channel having a diversion area, a mainstream area and a convergence area, the flow channel having an inlet and an outlet, the diversion area being connected to the inlet and the converging zone is connected to the liquid outlet, the cooling medium enters the flow channel through the liquid inlet. CN106025132 discloses a battery pack device, comprising a length-adjustable box body and at least two standard battery modules connected in series; each of the said standard battery modules is mounted on a cooling plate; the said cooling plate is connected to the said box body by a mounting bracket. CN103540910 discloses a shower head and a reaction chamber. The spray head includes a top plate, a gas distribution plate and a cooling plate stacked from top to bottom.

### Summary

Provided in the present embodiment of the application is a liquid cooling assembly and a battery pack, including: a liquid cooling plate, the liquid cooling plate including a flat plate abutted a battery cell and a channel plate abutted the flat plate. At least one first liquid cooling module and at least one second liquid cooling module are defined between the channel plate and the flat plate, both the first liquid cooling module and the second liquid cooling module including a plurality of connected liquid cooling channels in parallel. The liquid cooling plate is provided with an inlet and an outlet, the first liquid cooling module being provided on a side close to the inlet and the outlet, the second liquid cooling module being provided on a side away from the inlet and the outlet. The inlet is in communication with the first liquid cooling module and the second liquid cooling module, and the second liquid cooling module is in communication with the outlet. A coolant flowing rate within the liquid cooling channel of the first liquid cooling module is greater than a coolant flowing rate within the liquid cooling channel of the second liquid cooling module. The liquid cooling plate includes two first liquid cooling modules connected in parallel and two second liquid cooling modules connected in parallel; widths of the liquid cooling channel of two first liquid cooling module are larger than those of two second liquid cooling module; and an amount of the liquid cooling channel of two first liquid cooling module is less than that of two second liquid cooling module.

Provided in the present implementation of the application is also a battery pack, including a box. The liquid cooling plate and the battery cell are provided in the box. The liquid cooling plate is fixed with the box by glue.

In summary, a liquid cooling assembly and a battery pack provided by the present application provide the following technical effects:
(1) The first liquid cooling module and the second liquid cooling module of the present application include a plurality of liquid cooling channels connected in parallel, so as to allow the coolant to diverge and avoid the liquid cooling channels connected in series being too long, which increases the flow resistance of the coolant. In such a setup, it may effectively avoid the unevenness of the temperature of the coolant that may easily occur in different regions within the liquid cooling plate, which may reduce the risk of partial overheating of the battery, and enhance the performance of the battery and the lifespan of the battery pack.
(2) In the present application, the coolant flowing rate in the liquid cooling channel of the first liquid cooling module is greater than that of the second liquid cooling module, so that the coolant in the liquid cooling channel away from the inlet and the outlet may be in full contact with the battery cell for additional time to safeguard the cooling effect, which avoids the risk of partial overheating of the battery, and improves the performance of the battery.

### Brief description of the drawings

Fig. 1 is a structural diagram in a perspective view of the box;
Fig. 2 is a mounting diagram of the liquid cooling assembly inside the box;
Fig. 3 is a partially enlarged view of Fig. 2 at A;
Fig. 4 is a structural diagram of the liquid cooling assembly provided on a top of a battery cell;
Fig. 5 is a cross-sectional diagram at the inlet connector and the outlet connector.

The meanings of the attached markings are as follows:
1 battery pack; 11 battery cell;
2 liquid cooling assembly; 20 first liquid cooling module; 21 second liquid cooling module; 22 liquid cooling channel; 221 first channel; 222 second channel; 23 inlet; 24 outlet; 25 liquid disturbance block;
3 liquid cooling plate; 31 channel plate; 32 flat plate; 33 inlet connector; 34 outlet connector;
4 fastening structure;
5 molding slot; 51 through-hole;
6 box; 61 upper housing; 62 lower cover;
7 sealing member;
81 inlet pipe; 82 outlet pipe.

### Detailed description of the preferred embodiments

In the description of the present application, it is to be noted that the terms "up", "down", "front", "back", "left", "right", "vertical", "horizontal", "top", "bottom", "inside", "outside" and other orientation or position relationships are based on the orientation or position relationships shown in the attached drawings. It is only intended to facilitate description and simplify operation, but not to indicate or imply that the referred device or element has a specific orientation, or is constructed and operated in a specific orientation. Therefore, they should not be construed as a limitation of the present application.

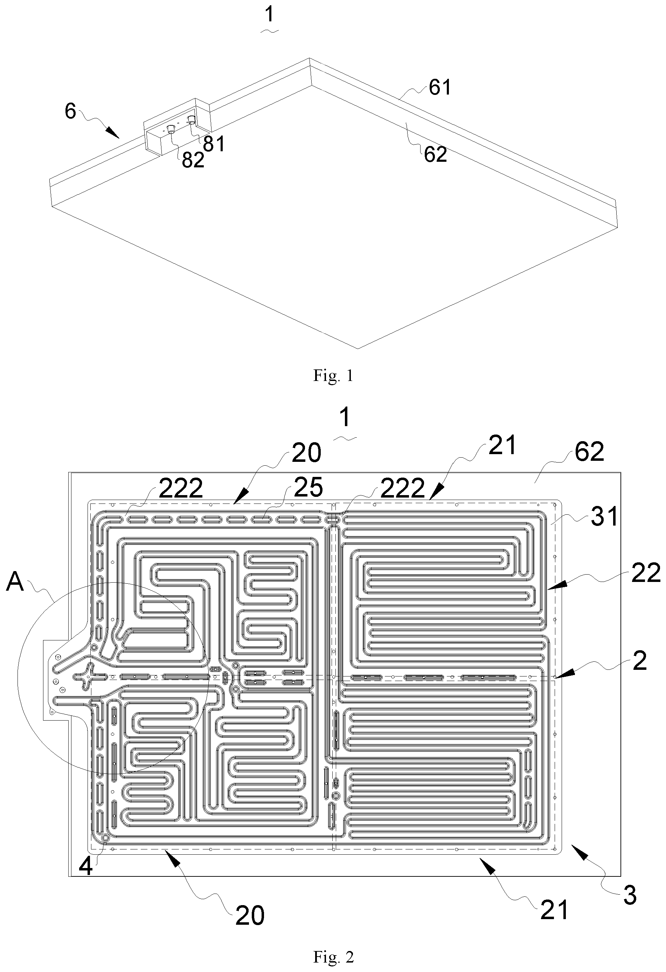

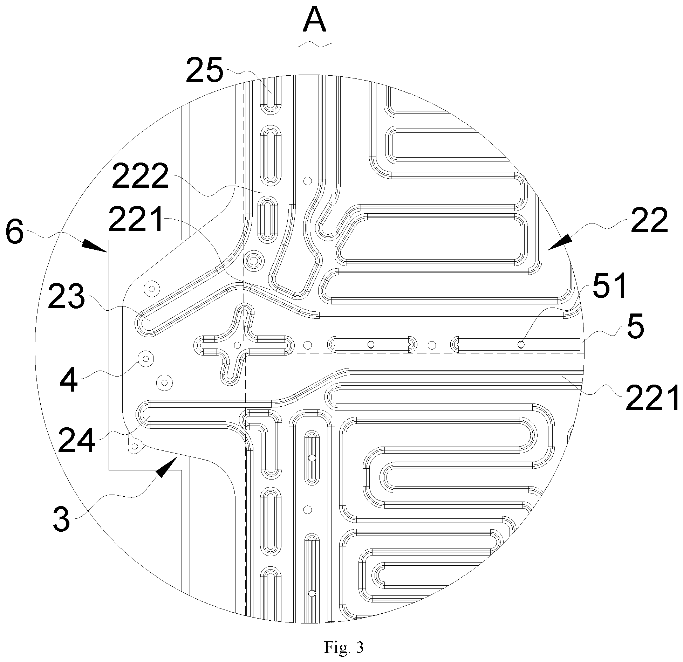

Referring to Fig. 2 and Fig. 3, a liquid cooling assembly 2 includes: a liquid cooling plate 3, the liquid cooling plate 3 including a flat plate 32 abutted a battery cell 11 and a channel plate 31 abutted the flat plate 32; at least one first liquid cooling module 20 and at least one second liquid cooling module 21 are defined between the channel plate 31 and the flat plate 32, both the first liquid cooling module 20 and the second liquid cooling module 21 including a plurality of connected liquid cooling channels 22 in parallel; the liquid cooling plate 3 is provided with an inlet 23 and an outlet 24, the first liquid cooling module 20 being provided on a side close to the inlet 23 and the outlet 24, the second liquid cooling module 21 being provided on a side away from the inlet 23 and the outlet 24; the inlet 23 is in communication with the first liquid cooling module 20 and the second liquid cooling module 21, and the second liquid cooling module 21 is in communication with the outlet 24; and a coolant flowing rate within the liquid cooling channel 22 of the first liquid cooling module 20 is greater than a coolant flowing rate within the liquid cooling channel 22 of the second liquid cooling module 21.

In the process, the coolant enters the liquid cooling channel 22 of the first liquid cooling module 20 from the inlet 23 to exchange heat for the first liquid cooling module 20, and also, the coolant enters the liquid cooling channel 22 of the second liquid cooling module 21 from the inlet 23 to exchange heat for the second liquid cooling module 21.

The first liquid cooling module 20 and the second liquid cooling module 21 of the present application include a plurality of liquid cooling channels 22 connected in parallel, so as to allow the coolant to diverge and avoid the liquid cooling channels 22 connected in series being too long, which increases the flow resistance of the coolant. In such a setup, it may effectively avoid the unevenness of the temperature of the coolant that may easily occur in different regions within the liquid cooling plate 3, which may reduce the risk of partial overheating of the battery, and enhance the performance of the battery and the lifespan of the battery pack 1.

It is to be noted that, the first liquid cooling module 20 is provided on a side close to the inlet 23 and the outlet 24; the second liquid cooling module 21 is provided on a side away from the inlet 23 and the outlet 24; and a coolant flowing rate within the liquid cooling channel 22 of the first liquid cooling module 20 is greater than a coolant flowing rate within the liquid cooling channel 22 of the second liquid cooling module 20. Understandably, since the coolant in the liquid cooling channel 22 away from the inlet 23 and the outlet 24 is at a higher temperature, additional heat transfer time is required to allow full contact between the coolant and the battery cell 11 to safeguard the cooling effect.

Therefore, in the present application, the coolant flowing rate in the liquid cooling channel 22 of the first liquid cooling module 20 is greater than that of the second liquid cooling module 21, so that the coolant in the liquid cooling channel 22 away from the inlet 23 and the outlet 24 may be in full contact with the battery cell 11 for additional time to safeguard the cooling effect, which avoids the risk of partial overheating of the battery, and improves the performance of the battery.

It is also to be noted that the channel plate 31 is provided with a plurality of chambers in parallel protruding in a direction away from the battery cell 11, the chambers and a surface adjacent to the flat plate 32 defining a first liquid cooling module 20 and a second liquid cooling module 21. The surface of the flat plate 32 facing the battery cell 11 is constructed as a flat profile to improve the adhesion of the liquid cooling plate 3 to the battery cell 11, thereby improving the heat dissipation effect. Preferably, in the present embodiment, the liquid cooling plate 3 includes two first liquid cooling modules 20 connected in parallel and two second liquid cooling modules 21 connected in parallel. In other embodiments, the amount and layout of the first liquid cooling module 20 and the second liquid cooling module 21 may vary according to the actual requirements.

In such a setup, by adopting a channel plate 31 and a flat plate 32 to define each liquid cooling plate 3 of the liquid cooling channel 22 in the present application, not only the adhesion of the liquid cooling plate 3 to the battery cell 11 may be improved so as to improve the heat dissipation effect, but also the overall thickness of the liquid cooling plate 3 may be reduced so as to achieve a more compact structure of the liquid cooling plate 3, which may also effectively reduce the weight of the liquid cooling plate 3 to provide space support for the expansion of the battery capacity.

Referring to Fig. 2 and Fig. 3, the liquid cooling channel 22 includes: a first channel 221, in communication with the inlet 23 and any one of the liquid cooling channels 22 within the first liquid cooling module 20; and a second channel 222, in communication with the inlet 23 and any one of the liquid cooling channels 22 within the second liquid cooling module 21, wherein the second channel 222 flows through a periphery of the first liquid cooling module 20.

In the process, the coolant enters the first channel 221 and the second channel 222 from the inlet 23 respectively, and the coolant entering the first channel 221 is then divided into a plurality of liquid-cooling channels 22 connected in parallel in the first liquid cooling module 20, so as to exchange heat for the first liquid cooling module 20. The coolant entering the second channel 222 is then divided into a plurality of liquid cooling channels 22 connected in parallel in the second liquid cooling module 21, so as to exchange heat for the second liquid cooling module 21.

Referring to Fig. 3, a liquid disturbance block 25 is provided in the first channel 221 and/or the second channel 222. An amount of the liquid disturbance block 25 in the first channel 221 is greater than that in the second channel.

It is to be noted that, in the present application, by providing a plurality of liquid disturbance blocks 25 within the first channel 221 and/or the second channel 222, the plurality of liquid disturbance blocks 25 are distributed along the extension direction of the first channel 221 and/or the second channel 222, and the area where the liquid disturbance blocks 25 are located forms a semi-closed spoiler region, so that the coolant entering the spoiler region, after being blocked, turns from a laminar flow into a turbulent flow and then flows out, thereby improving the coolant disturbance state within the first channel 221 and/or the second channel 222, increasing the coolant flowing rate, and thus improving the heat exchange efficiency.

It is also to be noted that, in the present application, the coolant flowing rate is regulated by providing a different quantity of liquid disturbance blocks 25 for the first channel 221 and/or the second channel 222, so that the coolant flowing rate of the first liquid cooling module 20 close to the inlet 23 is greater than the coolant flowing rate of the second liquid cooling module 21 far away from the inlet 23, so as to ensure that the coolant within the second liquid cooling module 21 may be in full contact with the battery cell 11 for additional time to safeguard the cooling effect, which avoids the risk of partial overheating of the battery, and achieves the heat transfer homogeneity of the first liquid cooling module 20 and/or the second liquid cooling module 21.

Referring to Fig. 2, shapes of the liquid cooling channels 22 of the first liquid cooling module 21 and the second liquid cooling module 22 are identical or different; and an amount of the liquid cooling channels 22 of the first liquid cooling module 21 and the second liquid cooling module 22 is identical or different.

It is to be noted that, the layout form of the liquid cooling channel 22 within each liquid cooling module may be the same or different. The specific layout may be adjusted according to heat dissipation requirements of batteries.

In the present invention the liquid cooling plate 3 includes two first liquid cooling modules 20 connected in parallel and two second liquid cooling modules 21 connected in parallel. Widths of the liquid cooling channel 22 of two first liquid cooling module 20 are larger than those of two second liquid cooling module 21, and an amount of the liquid cooling channel 22 of two first liquid cooling module 20 is smaller than that of two second liquid cooling module 21, so as to regulate the coolant flowing rate, so that the coolant flowing rate of the first liquid cooling module 20 close to the inlet 23 is greater than the coolant flowing rate of the second liquid cooling module 21 far away from the inlet 23, which ensures that the coolant within the second liquid cooling module 21 may be in full contact with the battery cell 11 for additional time to safeguard the cooling effect.

Referring to Fig. 2, the liquid cooling channel 22 includes one of a concentric-square channel, a serpentine channel or a straight channel.

Specifically, in a single liquid cooling module, different liquid cooling channels 22 thereof are in different shapes. The specific provision may be adjusted according to the heat dissipation of batteries.

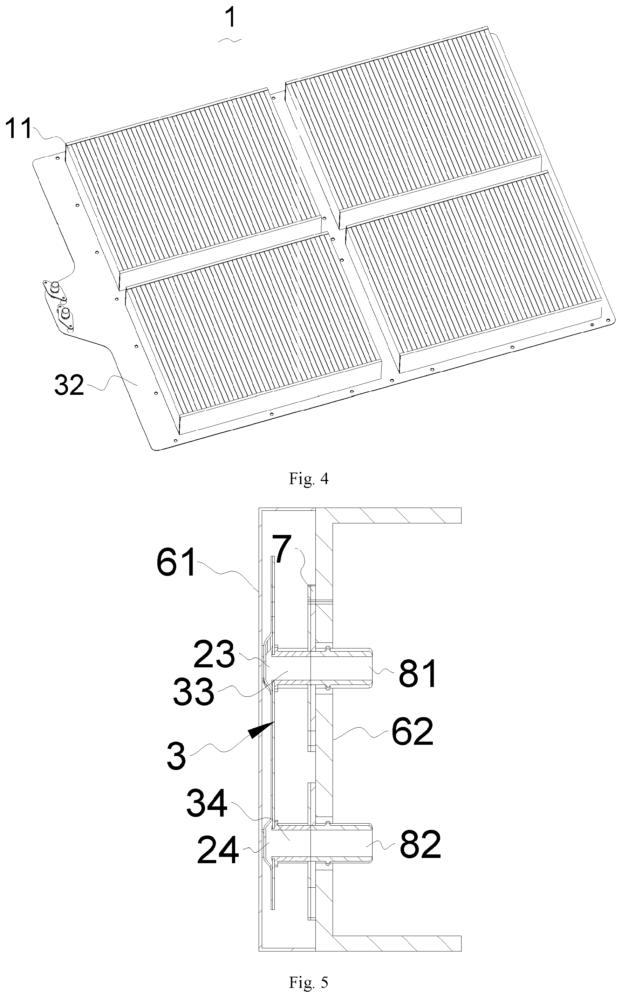

Referring to Fig. 1, Fig. 2 and Fig. 4, the liquid cooling plate 3 abuts a top or a lateral surface of the battery cell 11.

The liquid cooling plate 3 of the present application is provided on a top or a lateral surface of the battery cell 11 to reduce the load on the liquid cooling plate 3 and prevent the liquid cooling plate 3 from deformation to fail. Therefore, adopting the present application improves the cooling effect of the liquid cooling plate 3 on the battery while improving the strength of the liquid cooling plate 3 to prevent the liquid cooling plate 3 from deformation to fail.

Preferably, in the present embodiment, the liquid cooling plate 3 is provided on a top of the battery cell 11.

Referring to Fig. 2, Fig. 3 and Fig. 4, a fastening structure 4 is provided between the channel plate 31 and the flat plate 32.

In the present application, a fastening structure 4 is provided between the channel plate 31 and the flat plate 32 to improve the strength of the liquid cooling plate 3 to prevent the liquid cooling plate 3 from deformation to fail.

It is to be emphasized that the liquid cooling plate 3 of the present application is made of composite 6 series aluminum material. The existing liquid cooling plate 3 are usually made of composite 3-series aluminum material. The characteristics of the 3-series aluminum material are: aluminum alloy with manganese as the main alloying element, not heat treatable for strengthening, good corrosion resistance, also known as rust-proof aluminum, good weldability, and good plasticity. The disadvantage thereof is low strength, so that the load-bearing capacity thereof is poor, which may easily lead to deformation of the liquid cooling plate 3 and risk of failure. The characteristics of the 6-series aluminum material are: magnesium and silicon based, moderate strength, suitable for applications requiring high corrosion and oxidation resistance, easy to coat, good machinability, good weldability, good processability, and easy to extrude out of the molding.

The present application adopts 6-series aluminum material to produce liquid cooling plate 3, which may further increase the strength of the liquid cooling plate 3 and prevent the liquid cooling plate 3 from deformation to fail or deformation to affect the cooling and temperature equalization effect on the battery cell 11.

Referring to Fig. 2, Fig. 3 and Fig. 4, the fastening structure 4 includes fastening bolts provided on ends of the channel plate 31 and the flat plate 32, and positions with no channel.

Specifically, screw holes are provided on the channel plate 31 and the flat plate 32 of the liquid cooling plate 3, and the channel plate 31 is fixed with the flat plate 32 by bolts, which further improves the overall strength, flatness and stability of the liquid cooling plate 3. Preferably, in the present embodiment, bolts are adopted to fix the channel plate 31 and the flat plate 32. In other embodiments, different structures are adopted to fix the channel plate 31 and the flat plate 32 according to the actual requirements.

Referring to Fig. 2, Fig. 3 and Fig. 4, the channel plate 31 is connected to the flat plate 32 by brazing; a plurality of molding slots 5 are provided between the channel plate 31 and the flat plate 32; and the molding slot 5 is provided with a through-hole 51.

In the present embodiment, the channel plate 31 is connected to the flat plate 32 by brazing. In other embodiments, the connection between the channel plate 31 and the flat plate 32 is provided with different setups according to different actual requirements.

It is to be noted that, brazing is a method of joining without melting the base material by using a solder with a melting temperature lower than that of the base material. The characteristics of brazing are: low brazing heating temperature, smooth and flat joints, small changes in the tissue and mechanical properties, small deformation, accurate size of the workpiece, no strict limitations on the difference in thickness of the workpiece, simple brazing equipment, low production investment costs.

Additionally, in order to prevent the liquid cooling plate 3 from bulging due to excessive width of the welded portion, a molding slot 5 is also provided on the channel plate 31 without a channel and the slot is provided with a through-hole 51, in which the through-hole 51 is used for passage of gas between the channel plate 31 and the flat plate 32 during welding. Such a setup may increase the production yield of the liquid cooling plate 3, thereby reducing the production cost.

Referring to Fig. 1, Fig. 2 and Fig. 4, as another aspect, provided in the present application is a battery pack 1, including the liquid cooling assembly 2 mentioned above, also including: a box 6; the liquid cooling plate 3 and the battery cell 11 are provided in the box 6; and the liquid cooling plate 3 is fixed with the box 6 by glue.

Specifically, the box 6 includes an upper shell 61 and a lower cover 62; the upper shell 61 and the lower cover 62 are defined to form an accommodating chamber; the liquid cooling plate 3 and the battery cell 11 are provided in the accommodating chamber; the liquid cooling plate 3 is provided between the battery cell 11 and the upper shell 61; and the liquid cooling plate 3 is fixed to the upper shell 61 by gluing, so as to further increase the overall strength and the stability of the liquid cooling plate 3, and prevent the liquid cooling plate 3 from deformation to fail.

Referring to Fig. 1, Fig. 4 and Fig. 5, the liquid cooling plate 3 also includes an inlet connector 33 communicated with the inlet 23 and an outlet connector 34 communicated with the outlet 24; the inlet connector 33 and the outlet connector 34 are extended outside the box 6; and the inlet connector 33 and the outlet connector 34 are provided with a sealing member 7 at a connection with the box 6.

Specifically, an end of each liquid cooling channel 22 is in communication with the inlet 23, and an opposite end thereof is in communication with the outlet 24. It is to be understood that the inlet connector 33 is in communication with the inlet 23, and the outlet connector 34 is in communication with the outlet 24.

It is to be noted that, the inlet connector 33, the outlet connector 34 and the liquid cooling plate 3 are fixed and connected by welding, integral molding or other processes. Therefore, there is no risk of coolant leakage at the connection between the inlet connector 33, the outlet connector 34 and the liquid cooling plate 3. Moreover, the inlet connector 33 and outlet connector 34 of the present application are extended outside the box 6, so as to prevent the coolant from leaking inside the box 6, resulting in short-circuiting of the battery due to the contact of the coolant with the battery. Therefore, such a setup may improve the safety of the battery.

It is also to be noted that the sealing member 7 may be a gasket, rubber ring, or other structure with sealing function. Sealing members are provided in the present application at the connection between the inlet connector 33, the outlet connector 34 and the box 6, thereby further preventing the coolant from leaking, which may result in short-circuiting of the battery due to the coolant contacting the battery. Such a setup improves the operating safety of the product and effectively avoids the risk of short-circuiting of the battery due to coolant leakage.

Referring to Fig. 1, Fig. 4 and Fig. 5, the battery pack also includes an inlet pipe 81, flanged to the inlet connector 33; an outlet pipe 82, flanged to the outlet connector 34; and the sealing member 7 is a flange pad.

Preferably, in the present embodiment, the inlet pipe 81 is flanged to the inlet connector 33, and the outlet pipe 82 is flanged to the outlet connector 34. Also, a flange pad is provided as the sealing member 7 to effectively prevent the coolant from leaking, which improves the safety of the production. It is to be noted that flange connection is to fix both ends of the pipe to be connected on a flange, then add a flange gasket between the two flanges, and finally tighten the two flanges with bolts so that they are tightly combined. The flange connection is easy to use, capable of withstanding relatively high pressure, and provides good sealing performance, which may effectively prevent coolant leakage.

The battery pack also includes a pole, the pole being provided with a waterproof member for preventing coolant leakage.

Understandably, in the present application, although the inlet connector 33 and the outlet connector 34 are extended to be provided outside the box 6 and the sealing member 7 is provided to prevent coolant leakage, in order to prevent coolant leakage in extreme cases, such as the case of impact and destruction by external forces, a waterproof member is provided on the poles of the battery, so as to further improve the safety of the battery. The waterproof member may be a waterproof baffle, waterproof cover, or other structure that fulfills the waterproofing requirements of the electrode column.

The first liquid cooling module 20 and the second liquid cooling module 21 of the present application include a plurality of liquid cooling channels 22 connected in parallel, so as to allow the coolant to diverge and avoid the liquid cooling channels 22 connected in series being too long, which increases the flow resistance of the coolant. In the present application, the coolant flowing rate in the liquid cooling channel 22 of the first liquid cooling module 20 is greater than that of the second liquid cooling module 21, so that the coolant in the liquid cooling channel 22 away from the inlet 23 and the outlet 24 may be in full contact with the battery cell 11 for additional time to safeguard the cooling effect, which avoids the risk of partial overheating of the battery, and improves the performance of the battery and the lifespan of the battery pack 1.

## Claims

1. A liquid cooling assembly (2), comprising:
a liquid cooling plate (3), the liquid cooling plate (3) comprising a flat plate (32) abutted a battery cell (11) and a channel plate (31) abutted the flat plate (32);
at least one first liquid cooling module (20) and at least one second liquid cooling module (21) are defined between the channel plate (31) and the flat plate (32), both the first liquid cooling module (20) and the second liquid cooling module (21) comprising a plurality of connected liquid cooling channels (22) in parallel;
the liquid cooling plate (3) is provided with an inlet (23) and an outlet (24), the first liquid cooling module (20) being provided on a side close to the inlet (23) and the outlet (24), the second liquid cooling module (20) being provided on a side away from the inlet (23) and the outlet (24);
the inlet (23) is in communication with the first liquid cooling module (20) and the second liquid cooling module (21), and the second liquid cooling module (21) is in communication with the outlet (24);
a coolant flowing rate within the liquid cooling channel (22) of the first liquid cooling module (20) is greater than a coolant flowing rate within the liquid cooling channel (22) of the second liquid cooling module (21); and
**characterized in that** the liquid cooling plate (3) includes two first liquid cooling modules (20) connected in parallel and two second liquid cooling modules (21) connected in parallel; widths of the liquid cooling channel (22) of two first liquid cooling module (20) are larger than those of two second liquid cooling module (21); and an amount of the liquid cooling channel (22) of two first liquid cooling module (20) is less than that of two second liquid cooling module (21).

2. The liquid cooling assembly (2) according to claim 1, wherein the liquid cooling channel (22) comprises:
a first channel (221), in communication with the inlet (23) and any one of the liquid cooling channels (22) within the first liquid cooling module (20); and
a second channel (222), in communication with the inlet (23) and any one of the liquid cooling channels (22) within the second liquid cooling module (21),
wherein the second channel (222) flows through a periphery of the first liquid cooling module (20).

3. The liquid cooling assembly (2) according to claim 2, wherein a liquid disturbance block (25) is provided in the first channel (221) and/or the second channel (222).

4. The liquid cooling assembly (2) according to claim 3, wherein an amount of the liquid disturbance block (25) in the first channel (221) is greater than that in the second channel (222).

5. The liquid cooling assembly (2) according to claim 1, wherein the liquid cooling channel (22) comprises one of a concentric-square channel, a serpentine channel or a straight channel.

6. The liquid cooling assembly (2) according to any one of claims 1-5, wherein the liquid cooling plate (3) abuts a top or a lateral surface of the battery cell (11).

7. The liquid cooling assembly (2) according to any one of claims 1-5, wherein a fastening structure (4) is provided between the channel plate (31) and the flat plate (32).

8. The liquid cooling assembly (2) according to claim 7, wherein the fastening structure (4) comprises fastening bolts provided on ends of the channel plate (31) and the flat plate (32), and positions with no channel.

9. The liquid cooling assembly (2) according to any one of claims 1-5 or 8, wherein the channel plate (31) is connected to the flat plate (32) by brazing;
a plurality of molding slots (5) are provided between the channel plate (31) and the flat plate (32); and the molding slot (5) is provided with a through-hole (51).

10. A battery pack (1), comprising a liquid cooling assembly (2) as claimed in any one of claims 1-9, also comprising:
a box (6); the liquid cooling plate (3) and the battery cell (11) are provided in the box (6);
and the liquid cooling plate (3) is fixed with the box (6) by glue.

11. The battery pack (1) according to claim 10, wherein the liquid cooling plate (3) also comprises an inlet connector (33) communicated with the inlet (23) and an outlet connector (34) communicated with the outlet (24);
the inlet connector (33) and the outlet connector (34) are extended outside the box (6); and the inlet connector (33) and the outlet connector (34) are provided with a sealing member (7) at a connection with the box (6).

12. The battery pack (1) according to claim 11, also comprising:
an inlet pipe (81), flanged to the inlet connector (33);
an outlet pipe (82), flanged to the outlet connector (34); and
the sealing member (7) is a flange pad.

13. The battery pack (1) according to any one of claims 10-12, also comprising:
a pole, the pole being provided with a waterproof member for preventing coolant leakage.

## Patentansprüche

1. Flüssigkeitskühlanordnung (2), umfassend:
eine Flüssigkeitskühlplatte (3), wobei die Flüssigkeitskühlplatte (3) eine flache Platte (32), die an eine Batteriezelle (11) grenzt, und eine Kanalplatte (31) umfasst, die an die flache Platte (32) grenzt;
zumindest ein erstes Flüssigkeitskühlmodul (20) und zumindest ein zweites Flüssigkeitskühlmodul (21) zwischen der Kanalplatte (31) und der flachen Platte (32) definiert sind, wobei sowohl das erste Flüssigkeitskühlmodul (20) als auch das zweite Flüssigkeitskühlmodul (21) eine Vielzahl von verbundenen Flüssigkeitskühlkanälen (22) parallel umfassen;
die Flüssigkeitskühlplatte (3) mit einem Einlass (23) und einem Auslass (24) versehen ist, wobei das erste Flüssigkeitskühlmodul (20) an einer Seite vorgesehen ist, die dem Einlass (23) und dem Auslass (24) nahe ist, das zweite Flüssigkeitskühlmodul (20) an einer Seite vorgesehen ist, die von dem Einlass (23) und dem Auslass (24) entfernt ist;
der Einlass (23) mit dem ersten Flüssigkeitskühlmodul (20) und dem zweiten Flüssigkeitskühlmodul (21) in Kommunikation steht, und das zweite Flüssigkeitskühlmodul (21) mit dem Auslass (24) in Kommunikation steht;
eine Kühlmitteldurchflussmenge innerhalb des Flüssigkeitskühlkanals (22) des ersten Flüssigkeitskühlmoduls (20) größer ist als eine Kühlmitteldurchflussmenge innerhalb des Flüssigkeitskühlkanals (22) des zweiten Flüssigkeitskühlmoduls (21); und
**dadurch gekennzeichnet, dass** die Flüssigkeitskühlplatte (3) zwei erste Flüssigkeitskühlmodule (20), die parallel verbunden sind, und zwei zweite Flüssigkeitskühlmodule (21), die parallel verbunden sind, umfasst; Breiten des Flüssigkeitskühlkanals (22) von zwei ersten Flüssigkeitskühlmodulen (20) größer sind als diejenigen von zwei zweiten Flüssigkeitskühlmodulen (21); und eine Menge des Flüssigkeitskühlkanals (22) von zwei ersten Flüssigkeitskühlmodulen (20) kleiner ist als diejenige von zwei zweiten Flüssigkeitskühlmodulen (21).

2. Flüssigkeitskühlanordnung (2) nach Anspruch 1, worin der Flüssigkeitskühlkanal (22) umfasst:
einen ersten Kanal (221), der mit dem Einlass (23) und irgendeinem der Flüssigkeitskühlkanäle (22) innerhalb des ersten Flüssigkeitskühlmoduls (20) in Kommunikation steht; und
einen zweiten Kanal (222), der mit dem Einlass (23) und irgendeinem der Flüssigkeitskühlkanäle (22) innerhalb des zweiten Flüssigkeitskühlmoduls (21) in Kommunikation steht,
worin der zweite Kanal (222) durch einen Umfang des ersten Flüssigkeitskühlmoduls (20) fließt.

3. Flüssigkeitskühlanordnung (2) nach Anspruch 2, worin ein Flüssigkeitsstörungsblock (25) im ersten Kanal (221) und/oder im zweiten Kanal (222) vorgesehen ist.

4. Flüssigkeitskühlanordnung (2) nach Anspruch 3, worin eine Menge des Flüssigkeitsstörungsblocks (25) im ersten Kanal (221) größer ist als im zweiten Kanal (222).

5. Flüssigkeitskühlanordnung (2) nach Anspruch 1, worin der Flüssigkeitskühlkanal (22) einen von einem konzentrisch-quadratischen Kanal, einem schlangenförmigen Kanal oder einem geraden Kanal umfasst.

6. Flüssigkeitskühlanordnung (2) nach einem der Ansprüche 1-5, worin die Flüssigkeitskühlplatte (3) an eine obere oder eine seitliche Fläche der Batteriezelle (11) grenzt.

7. Flüssigkeitskühlanordnung (2) nach einem der Ansprüche 1-5, worin eine Befestigungsstruktur (4) zwischen der Kanalplatte (31) und der flachen Platte (32) vorgesehen ist.

8. Flüssigkeitskühlanordnung (2) nach Anspruch 7, worin die Befestigungsstruktur (4) Befestigungsbolzen umfasst, die an Enden der Kanalplatte (31) und der flachen Platte (32) vorgesehen sind, und sich an keinem Kanal positioniert.

9. Flüssigkeitskühlanordnung (2) nach einem der Ansprüche 1-5 oder 8, worin die Kanalplatte (31) mit der flachen Platte (32) durch Lötung verbunden ist;
eine Vielzahl von Formungsschlitzen (5) zwischen der Kanalplatte (31) und der flachen Platte (32) vorgesehen sind; und der Formungsschlitz (5) mit einem Durchgangsloch (51) versehen ist.

10. Batteriepack (1), umfassend eine Flüssigkeitskühlanordnung (2) nach einem der Ansprüche 1-9, auch umfassend:
einen Kasten (6); die Flüssigkeitskühlplatte (3) und die Batteriezelle (11) im Kasten (6) vorgesehen sind; und die Flüssigkeitskühlplatte (3) mit dem Kasten (6) durch Klebstoff fixiert ist.

11. Batteriepack (1) nach Anspruch 10, worin die Flüssigkeitskühlplatte (3) auch einen Einlassverbinder (33), der mit dem Einlass (23) in Kommunikation gebracht wird, und einen Auslassverbinder (34), der mit dem Auslass (24) in Kommunikation gebracht wird, umfasst;
der Einlassverbinder (33) und der Auslassverbinder (34) sich außerhalb des Kastens (6) ausdehnen; und der Einlassverbinder (33) und der Auslassverbinder (34) mit einem Dichtungselement (7) an einer Verbindung mit dem Kasten (6) versehen sind.

12. Batteriepack (1) nach Anspruch 11, auch umfassend:
ein Einlassrohr (81), das an dem Einlassverbinder (33) angeflanscht ist;
ein Auslassrohr (82), das an dem Auslassverbinder (34) angeflanscht ist; und
das Dichtungselement (7) eine Flanschdichtung ist.

13. Batteriepack (1) nach einem der Ansprüche 10-12, auch umfassend:
einen Pol, wobei der Pol mit einem wasserdichten Element zum Verhindern von Kühlmittelverlust versehen ist.

## Revendications

1. Ensemble de refroidissement par liquide (2) comprenant :
une plaque de refroidissement par liquide (3), la plaque de refroidissement par liquide (3) comprenant une plaque plate (32) en butée contre un élément de batterie (11) et une plaque de canal (31) en butée contre la plaque plate (32) ;
au moins un premier module de refroidissement par liquide (20) et au moins un second module de refroidissement par liquide (21) sont définis entre la plaque de canal (31) et la plaque plate (32), à la fois le premier module de refroidissement par liquide (20) et le second module de refroidissement par liquide (21) comprenant une pluralité de canaux de refroidissement par liquide (22) connectés en parallèle ;
la plaque de refroidissement par liquide (3) est dotée d'une entrée (23) et d'une sortie (24), le premier module de refroidissement par liquide (20) étant prévu sur un côté proche de l'entrée (23) et de la sortie (24), le second module de refroidissement par liquide (20) étant prévu sur un côté éloigné de l'entrée (23) et de la sortie (24) ;
l'entrée (23) est en communication avec le premier module de refroidissement par liquide (20) et le second module de refroidissement par liquide (21), et le second module de refroidissement par liquide (21) est en communication avec la sortie (24) ;
un débit de liquide de refroidissement à l'intérieur du canal de refroidissement par liquide (22) du premier module de refroidissement par liquide (20) est supérieur à un débit de liquide de refroidissement à l'intérieur du canal de refroidissement par liquide (22) du second module de refroidissement par liquide (21) ; et
**caractérisé en ce que** la plaque de refroidissement par liquide (3) comprend deux premiers modules de refroidissement par liquide (20) connectés en parallèle et deux seconds modules de refroidissement par liquide (21) connectés en parallèle ; les largeurs du canal de refroidissement par liquide (22) de deux premiers modules de refroidissement par liquide (20) sont plus grandes que celles de deux seconds modules de refroidissement par liquide (21) ; et une quantité du canal de refroidissement par liquide (22) de deux premiers modules de refroidissement par liquide (20) est inférieure à celle de deux seconds modules de refroidissement par liquide (21).

2. Ensemble de refroidissement par liquide (2) selon la revendication 1, dans lequel le canal de refroidissement par liquide (22) comprend :
un premier canal (221), en communication avec l'entrée (23) et l'un quelconque des canaux de refroidissement par liquide (22) à l'intérieur du premier module de refroidissement par liquide (20) ; et
un second canal (222), en communication avec l'entrée (23) et l'un quelconque des canaux de refroidissement par liquide (22) à l'intérieur du second module de refroidissement par liquide (21),
dans lequel le second canal (222) s'écoule à travers une périphérie du premier module de refroidissement par liquide (20).

3. Ensemble de refroidissement par liquide (2) selon la revendication 2, dans lequel un bloc de perturbation de liquide (25) est prévu dans le premier canal (221) et/ou le second canal (222).

4. Ensemble de refroidissement par liquide (2) selon la revendication 3, dans lequel une quantité du bloc de perturbation de liquide (25) dans le premier canal (221) est supérieure à celle dans le second canal (222).

5. Ensemble de refroidissement par liquide (2) selon la revendication 1, dans lequel le canal de refroidissement par liquide (22) comprend l'un d'un canal carré concentrique, d'un canal en serpentin ou d'un canal droit.

6. Ensemble de refroidissement par liquide (2) selon l'une quelconque des revendications 1 à 5, dans lequel la plaque de refroidissement par liquide (3) bute contre une surface supérieure ou latérale de l'élément de batterie (11).

7. Ensemble de refroidissement par liquide (2) selon l'une quelconque des revendications 1 à 5, dans lequel une structure de fixation (4) est prévue entre la plaque de canal (31) et la plaque plate (32).

8. Ensemble de refroidissement par liquide (2) selon la revendication 7, dans lequel la structure de fixation (4) comprend des boulons de fixation prévus sur les extrémités de la plaque de canal (31) et de la plaque plate (32), et des positions sans canal.

9. Ensemble de refroidissement par liquide (2) selon l'une quelconque des revendications 1 à 5 ou 8, dans lequel la plaque de canal (31) est connectée à la plaque plate (32) par brasage ;
une pluralité de fentes de moulage (5) sont prévues entre la plaque de canal (31) et la plaque plate (32) ; et la fente de moulage (5) est pourvue d'un trou traversant (51).

10. Bloc-batterie (1), comprenant un ensemble de refroidissement par liquide (2) selon l'une quelconque des revendications 1 à 9, comprenant également :
un boîtier (6) ; la plaque de refroidissement par liquide (3) et l'élément de batterie (11) sont fournis dans le boîtier (6) ;
et la plaque de refroidissement par liquide (3) est fixée avec le boîtier (6) par de la colle.

11. Bloc-batterie (1) selon la revendication 10, dans lequel la plaque de refroidissement par liquide (3) comprend également un connecteur d'entrée (33) en communication avec l'entrée (23) et un connecteur de sortie (34) en communication avec la sortie (24) ;
le connecteur d'entrée (33) et le connecteur de sortie (34) sont étendus à l'extérieur du boîtier (6) ;
et le connecteur d'entrée (33) et le connecteur de sortie (34) sont pourvus d'un élément d'étanchéité (7) au niveau d'une connexion avec le boîtier (6).

12. Bloc-batterie (1) selon la revendication 11, comprenant en outre :
un tuyau d'entrée (81), bridé au connecteur d'entrée (33) ;
un tuyau de sortie (82), bridé au connecteur de sortie (34) ; et
l'élément d'étanchéité (7) est un patin de bride.

13. Bloc-batterie (1) selon l'une quelconque des revendications de 10 à 12, comprenant en outre :
un poteau, le poteau étant pourvu d'un élément étanche pour empêcher les fuites de liquide de refroidissement.
